# EUROPEAN PATENT APPLICATION

(11) **EP 1 533 604 A1**
(43) Date of publication of application: **25.05.2005**
(21) Application number: 03425739.4
(22) Date of filing: 18.11.2003
(51) Int. Cl.: G01N 1/30, G01N 1/28

(54) **Preparation method of a histological sample for the diagnostic staining thereof**

(71) Applicant: Bio Optica-Milano S.p.A., 20134 Milano (IT)
(72) Inventor: Venerucci, Francesca, 40138 Bologna (IT)
(74) Representative: Long, Giorgio

(57) **Abstract**

The present finding relates to the preparation method of a histological sample for its staining within the diagnostic sector. In particular, the finding refers to a method for eliminating the paraffin and/or the formalin from histological samples which are afterwards subjected to histological staining.

## Description

. The present finding relates to the preparation method of a histological sample for the staining thereof within the diagnostic sector. In particular, the finding refers to a method for eliminating paraffin from histological samples which are afterwards subjected to histological staining.

**.** Within the pathological anatomy sector, histology covers such an important role as to be routinely used in analytical laboratories. As is by now widely known, a sample of a tissue to be analysed is normally first fixed, so as to preserve the protoplasmic structure from the consequent alterations brought about by cellular death with a minimum of change. Fixation occurs through the use of different substances, amongst which, formalin represents the most common. Afterwards, the tissue sample is infiltrated with an inclusion medium such as for example paraffin, gelatine, celloidin or with a plastic material with the ability to solidify. Thus, a solid block is obtained, inside of which the infiltrated tissue remains enclosed, and which may be sectioned using a microtome into slices of 3-10 µm of thickness. Inclusion must be proceeded by the dehydration of the tissue in organic solvents such as ethyl alcohol and subsequently by immersion of the tissue in solvents of the inclusion material used, such as xylol or benzol in the case of paraffin, so as to allow its subsequent infiltration by the paraffin.

**.** The sections obtained as just described are afterwards made to adhere to a histology slide and immersed into a solvent suitable for extracting the inclusion material, such as xylol or benzol for paraffin, then hydrated by passing through a series of decreasing ethyl alcohol concentrations until reaching distilled water.

. At this point, the tissue sample, thus obtained on the slide, may be stained in a solution, normally aqueous, of the desired stain, in accordance with any one of the histochemical methods known in the sector.

. In particular, the paraffin elimination procedure (the most common means of inclusion) must necessarily be achieved by using notoriously toxic solvents indeed such as benzol, xylene or ethyl alcohol. Furthermore, this procedure envisages a certain number of steps, or "washes", amongst which are for example, one in xylene 1 for 5 minutes, one in xylene 2 for 5 minutes, one in absolute ethanol for 2 minutes, one in ethanol 95° 1 for 2 minutes, one in ethanol 95° 2 for 2 minutes, one in ethanol 70° for 2 minutes and one in distilled water for 1 minute.

. From the description, it is apparent that the procedure for removing the paraffin from a histological tissue sample is laborious and compels the operator to manipulate toxic substances and to work under a chemical hood in order to avoid, by as much as possible, any contact with or dispersions of said substances. In addition, the solvents used for this purpose are somewhat costly.

**.** The technical problem lying at the heart of the present invention is therefore that of devising a preparation method, of a histological sample for its staining, which allows the obviation of the aforementioned drawbacks.

. Such a problem is resolved by a preparation method of a histological sample for its staining as covered by the principal claim enclosed.

. Consequently, a first subject of the present invention is that of providing a method which considerably reduces or even eliminates the dangerous use of the solvents used by the known art, at the same time, streamlining the operations of the method itself.

. Besides the aforementioned histochemical method, in diagnostics, a method denominated immunohistochemical is also known. This type of approach is based on the antigen-antibody reaction. In summary, specific antibodies are prepared which bind to the substance which it is desired to identify (antigen) through the immunisation of animals in accordance with widely known techniques. These antibodies are then placed in contact with the sample in such a manner as to bind to the corresponding antigen and subsequently the antigen-antibody system is chemically conjugated with detecting substances, such as staining or fluorescent substances. The appearance of a luminous signal or a stain indicates therefore the presence of the substance of interest.

**.** It is known however that antigens, or the antigenic sites of a molecule which it is intended to identify, are masked during the fixing process of the sample with formalin and its subsequent inclusion in paraffin. Consequently, prior to subjecting a sample to histochemical investigation it is necessary to treat said sample in the above described manner and afterwards also treat it with an "unmasking" reaction which liberates the masked antigenic sites above all from the formalin. This process is therefore composed of two stages: A preliminary stage involving the removal of the paraffin from the sample to be tested and a second, more delicate stage, wherein the antigenic sites of interest are liberated from the formalin in order to allow binding with a detecting antibody.

**.** A second object of the present invention is therefore that of providing a method for liberating the antigenic sites of a substance in a biological sample which is simpler to perform.

**.** An additional object of the invention is that of providing a kit for the elimination of paraffin from biological tissue samples which satisfies the requirements pointed out above with reference to the paraffin elimination method according to the known art.

. Another additional object of the present invention is that of providing a kit for liberating the antigenic sites of molecules of biological tissue samples.

**.** Amongst the immunohistochemical staining methods, there also exists a particular method aimed at the staining of cells which have more or less intense peroxidase activities. For example, it is known that blood cells have a high amount of peroxidase enzyme. Now, this enzyme has the drawback of giving rise to nonspecific staining when particular staining systems, in themselves well known in the sector, are used. Consequently, in these cases, it is important to block such enzyme action.

. Hence, an additional object of the present invention is that of providing a method for blocking peroxidase activity in histological samples which must be subjected to immunohistochemical staining.

. Further characteristics and advantages of the present invention will become apparent from the following description of embodiments, given by way of non-limiting example.

**.** It has been advantageously observed that if the samples in paraffin, cut into slices as described above, are subjected to heating to a certain temperature for a certain period of time and are subsequently subjected to a particular wash with a solution comprising surfactants, the paraffin is essentially eliminated without the use of the aforementioned solvents and the laborious operations associated with them.

**.** The founding idea of the invention is that of removing the paraffin from the histological samples by exploiting the micellar molecular structure of the surfactants. Indeed, thanks to the micellar arrangement, the surfactants may be dispersed in an aqueous solution and allow the capturing of the molten paraffin, insoluble in water, within their micelles. In this manner, the surfactants act as emulsifying substances.

**.** The method of preparation of a histological sample for its diagnostic staining according to the invention therefore comprises the following stages:
- heating said sample up to a temperature and for a period of time such as to obtain the melting of the paraffin in which it is included;
- washing said sample with an aqueous solution comprising at least one surfactant capable of sequestering the paraffin.

**.** The heating may take place using any method widely known in the sector such as for example heating in ovens, possibly ventilated, microwave ovens, pressure cookers or in thermostatically controlled baths. Generally, however, the use of any type of heating device is such as to allow the attainment of a temperature of around 100°C. Furthermore, said devices may be possibly equipped with means of stirring for facilitating the detachment of the paraffin from the histological sample.

. In particular, according to one preferred embodiment of the invention, the aforementioned heating and washing stages may be advantageously achieved simultaneously.

. Preferably, the heating stage is carried out at a temperature comprised of between 60°C and 65 °C, more preferably comprised of between 62°C and 63°C for a period of time comprised of between 3 and 60 minutes, preferably between 3 and 5 minutes.

. The surfactants capable of sequestering the paraffin may be selected from ionic and non-ionic surfactants. Amongst the non-ionic surfactants, those preferred have been the compounds selected from the monoesterified derivatives of sorbitan polyethoxylate, of sorbitan and the polyethylenic glycols derivatives.

**.** In particular, the aforementioned non-ionic surfactants comprise compounds monoesterified with fatty acids, having linear saturated or unsaturated hydrocarbon chains, containing from 8 to 20 carbon atoms, preferably from 10 to 20 carbon atoms, more preferably such chains are C₁₂ (lauric acid residue), C₁₆ (palmitic acid residue), unsaturated C₁₈ (oleic acid residue), C₁₈ stearic acid residue.

**.** Furthermore, the most advantageous compounds between the sorbitan derivatives are the derivatives of 1-5 sorbitan monoesterified with the following fatty acids: lauric acid, palmitic acid, oleic acid, stearic acid. The currently used chemical name for such products is generally that of sorbitan esters, in particular SORBITAN LAURATE (CAS No. 13-38-39-2) also recognised as Sorbitan monolaurate. The corresponding commercial names are for example Span 20, Arlacel 20. SORBITAN PALMITATE (Sorbitan palmitate CAS No. 26266-57-9) is also defined as Sorbitan monopalmitate and the corresponding commercial names are Span 40, Arlacel 40. Analogously, SORBITAN STEARATE (Sorbitan Stearate CAS No. 1338-41-6) is also called Sorbitan monostearate and is sold under the commercial names Span 60, Arlacel 60. SORBITAN OLEATE (Sorbitan Oleate CAS No. 1338-43-8) finally, is also called Sorbitan monooleate and sold under the commercial names Span 80, Arlacel 80.

**.** Amongst the sorbitan polyethoxylate compounds those most advantageous however are the Polysorbates, compounds sold under the commercial name TWEEN, amongst which is TWEEN 20 (having the name Polysorbate 20 according to the Official Italian Pharmacopoeia, XI^{th} edition; CAS No. 9005-64-5), also known as polyoxyethylene (20) sorbitan monolaurate ,POE (20) sorbitan monolaurate), TWEEN 60 (Polysorbate 60 CAS No. 9005-67-8), also known as polyoxyethylene (20) sorbitan monostearate,POE (20) sorbitan monolaurate), TWEEN 80 (Polysorbate 80 CAS No. 9005-65-6) also known as Polyoxyethylene (20) sorbitan monooleate, POE (20) sorbitan monooleate. In this case, the number next to the name indicates number of polyethoxylations and is common to all the Tweens.

. Amongst the polyethylenic glycols, those preferred are POE 40 monostearate and POE 50 mono stearate (40 is the number of polyethoxylations i.e. the number of oxyethylene molecules added to the ethylenic glycol molecule).

. In particular, sorbitan polyethoxylate (20) esterified with stearic acid has shown itself to be vary advantageous in that it allows carrying out the washing with an essentially clear solution.

**.** With that aim, it should be noted that the typology of non-ionic surfactant is advantageously selected in such a way as to have a hydrophilic/lipophilic balance (HLB), calculated according to the Griffin method, comprised of between 13 and 20. Indeed, it has been observed that this typology of surfactant allows operating with a solution that is able to remove the paraffin from the substrate, i.e. the histological sample, whilst remaining colourless and transparent.

**.** The working concentration of said surfactants varies preferably between 3-10% by volume with respect to the volume of the surfactant washing solution.

**.** Preferably, the washing stage is carried out with a mixture of the non-ionic surfactants from amongst those indicated previously in quantities which may vary from 2 to 10%.

. Furthermore, such a mixture may include a preservative, preferably selected from the group constisting of hydrosoluble preservatives such as for example Citrex®, a hydrosoluble and non-toxic citrus derivative, or aldehyde based preservatives, and present in a quantity which varies from 0.01 to 0.03% by volume over the volume of the washing solution. In this manner, both the washing solution and the sample itself do not encounter the phenomena of degradation.

**.** With that aim, following numerous investigations, it has been unexpectedly found that the use of sodium azide as a preservative, in itself well known, also advantageously allows obtaining the blocking of the peroxidase activities in said histological samples.

. Consequently, in accordance with a variant embodiment of the invention, the solution comprises sodium azide in quantities which vary from 0.09% to 7% by volume over the volume of the surfactant solution, preferably from 0.09% to 0.2%.

. In addition, said mixture may comprise a co-emulsifier substance capable of increasing the emulsifying power of the surfactant. In particular, said co-emulsifier is selected from the group constisting of glycol and polyglycol ethers, preferably, it is dibutylglycol, and is present in quantities that vary from 1 % to 2 % with respect to the volume of the surfactant solution.

. In order to obtain greater efficacy of the wash, as mentioned previously, the sample may be simultaneously subjected to agitation through, for example, agitatory means for thermostatically controlled baths, commonly used within the sector.

. The washing stage may be concluded with the immersion of the histological sample in distilled water.

**.** In the case in which a thermostatically controlled bath is used, the procedure generally comprises the use of a vertical container, for histological use, which is filled with a solution containing the surfactant according to the invention. A suitable rack containing the slides to be deparaffinised is then inserted into the container. The rack is then positioned within the thermostatically controlled bath, and the temperature which the fluid contained within the container must reach, is set. Once the desired temperature is reached, the number of minutes required by the method are counted. Finally, with the amount of time necessary for the treatment having lapsed, the rack is extracted and it is taken for a brief wash (15-30 seconds) in distilled water at room temperature. At this point the slide is ready for staining.

**.** It is apparent, that with the procedure just outlined, the heating and washing stage of the "de-paraffinisation" method may take place simultaneously.

. Usually, the ratio between the number of slides and the volume of surfactant substance varies from 1:8 to 1:20, preferably from 1:10.

. In accordance with an additional object of the invention, the method just described may comprise an "unmasking" stage of the antigenic sites hidden by the fixing process, for example with formalin. This stage comprises washing the sample with a solution comprising, rather than water as solvent, a suitable buffer for preparing said sample according to the type of staining which must be subsequently performed. Consequently, as is known, the buffer may be acidic or basic, and is prepared in accordance with procedures which are widely known in the sector.

**.** For example, in the case in which the "unmasking" must be carried out in an acidic environment, a citrate buffer comprising sodium citrate and citric acid 0.01 M, at pH 6 ± 0.1 or pH 6.8 ± 0.1 is normally used. Whilst, in the case in which the "unmasking" must be carried out in a basic environment, a Tris-EDTA-sodium citrate buffer 0.01 M at pH 8.0 ± 0.1 is normally used.

**.** The temperature of this washing stage is comprised of between 90 °C and 100° C, preferably between 90 °C and 95°C, whilst the times vary between 20 minutes and 50 minutes, preferably between 30 minutes and 40 minutes.

**.** In particular, the washing conditions, i.e. the solution, the pH, the temperature and the treatment times will be selected according to the type of antibody which will be adopted. In any case, such adjustments are within the reach of these skilled in the art.

**.** Advantageously, in addition, the aforementioned washing stage may be carried out simultaneously with the "de-paraffinisation" stage. Indeed, the "de-paraffinising" solution may be mixed with the "unmasking" solution, thus obtaining, in practice, a single solution with all the active components for both procedures. In this manner, with a single treatment it is possible to eliminate the paraffin and simultaneously make the antigenic sites of the histological sample available for immunohistochemical analysis. In other words, the water solvent within the "de-paraffinising" solution, may be simply substituted by one of the aforementioned buffers in such a manner that with the same solution and with a single wash, the "unmask" may also be performed.

. Furthermore, when the heating stage and the washing stage are carried out simultaneously, for example in a thermostatically controlled bath, they may be carried out at a temperature comprised of between 90 °C and 95 °C for a period of time comprised of between 45 and 50 minutes. Advantageously, the surfactant will be selected from among the non-ionic surfactants listed above, so as to not interact ionically with the acid/base equilibrium of the sample.

. In accordance with an additional object of the invention, a kit for the preparation of histological samples for their diagnostic staining has been perfected.

**.** The kit for the treatment of histological samples included in paraffin comprises a non-ionic surfactant solution adapted to substantially eliminate said paraffin. Said surfactant solution corresponds to the previously described "de-paraffinising" solution.

**.** Preferably and in accordance with a variant embodiment of the invention, the kit also comprises a solution adapted to unmasking the antigenic sites of said histological sample. This "unmasking" solution corresponds to the solution specified previously. The "de-paraffinising" solution and the "unmasking" solution may be included in separate containers or, advantageously, in a single container, possibly of the dispenser type.

. In addition, said kit may comprise at least one support adapted for carrying said sample included in paraffin, such as for example a histology slide and possibly at least one corresponding coverslip.

. The kit may also comprise a stain commonly used in the histochemical or immunohistochemical sector such as, for example, hematoxylin-eosin, Trypan-blue, Alcian-blue.

. Preferably, the kit also comprises a substance for ensuring the adhesion of the sample for treatment onto the histology slide and possibly a biocompatible glue in order to apply a coverslip over said sample.

. The kit forming the subject of the present invention may be advantageously provided with an explanatory sheet with the instructions for use.

. From that described up to now, it is evident that the present invention allows the overcoming of the drawbacks unfavourably mentioned in the introductory section. In particular, the method as well as the kit forming the subject off the invention do not oblige the operator to use solvents that are, on the one hand toxic and on the other expensive, during the "de-paraffinisation" stage. Furthermore, the elimination of said solvents brings notable streamlining of the paraffin elimination procedure as well as the "unmasking" of the antigenic sites of a sample to be analysed. Indeed, numerous passages in solvents are no longer required and the "unmasking" procedure may even be carried out at the same time as the "de-paraffinising" procedure.

. It has also been surprisingly found that with the method in agreement with the invention, it is possible to obtain staining with a greater yield with respect to the staining that is obtained following the treatment of a sample with the methods of the known art.

**.** In the following are reported some explanatory examples of the preparation method of a histological sample for its staining according to the invention

### EXAMPLE 1

### De-paraffinisation of a histological intestinal tissue section sample on a slide

**.** 1 litre of a 5% weight/volume aqueous solution of Sorbitan (20) OE monostearate has been prepared in the following manner. Into a processing beaker, equipped with a stirrer, are poured 500 ml of de-ionised H₂O. Afterwards, 50 g of polysorbate 60 (Tween 60 supplied by Fluka), 10 ml of dibutylglycol (supplied by A.C.E.F.), 0.3 ml of Citrex (Citrex Inc. Florida) are added with stirring. The remaining de-ionised water is used for the washing of the receptacles used for measuring the individual components, pouring all of it into the processing beaker. At this point, it is stirred for 5 minutes at room temperature.

**.** Afterwards, 250 ml of the solution, thus prepared, have been poured into a histology tray with a working capacity of 250 ml. Such a tray is placed into a thermostatically controlled bath of the type with a GTR 11x thermostatic unit as sold by ISCO and adjusted to a temperature of approx. 65°C. At this point, the slide for de-paraffinisation has been immersed into said solution and left for approx. 5 minutes. At the end of this period of time, the slide has been immersed in an appropriate vessel containing distilled water at room temperature, for approx. 0.5 minutes.

**.** The sample may now be subjected to staining using an Alcian Blue staining method. In particular, such a method envisages the immersion of the sample into a 0.6% aqueous solution of Alcian Blue stain at pH 2.5 for 30 minutes followed by an immersion stage in a saturated solution of sodium tetraborate in 80% ethanol at room temperature for 10 minutes. Afterwards, the sample is immersed in a Nuclear fast red stain solution for 5 minutes.

. At this point, the sample, thus treated, undergoes various passages in alcohols: two passages in ethanol 95 for 1 minute each, using fresh ethanol for the second passage, two passages in absolute ethanol for 1 minute each, again using fresh ethanol for the second passage, two passages in absolute ethanol, each for two minutes under the same conditions as before, and finally another two passages in Xylene for 5 minutes.

. The coverslip may now be mounted using xylene based glue in such a way that the slide, with the stained histological sample, may be analysed.

### EXAMPLE 2

### De-paraffinisation and unmasking of a Tonsil section histological sample on a slide - Citrate buffer

**.** 1 litre of a 0.01 M citrate buffer solution, pH 6.0 has been prepared, to which in the region of 5% weight/volume Sorbitan (20) OE monostearate has been added. Into a processing beaker, equipped with means of stirring, are poured 500 ml of 0.01 M citrate buffer/citric acid at pH 6.0. Afterwards, 50 g of polysorbate 60 (Fluka-Sigma Aldrich), 10 ml of dibutylglycol (Fluka), 0.3 ml of Citrex (Citrex Inc. Florida) are added with stirring. The remaining buffer is used for washing the receptacles used for measuring out the individual components, pouring all of it into the processing beaker. At this point, it is stirred for 5 minutes at room temperature.

. Afterwards, 250 ml of the solution , thus prepared, have been poured into a histology tray with a working capacity of 250 ml. Such tray is placed into a thermostatically controlled bath, of the types specified in example 1 and adjusted to a temperature of approx. 95°C. At this point, the slide to be de-paraffinised and unmasked has been immersed into said solution and left for 45 minutes. At the end of this period of time, after approx. 20 minutes of cooling, obtained by leaving the solution at room temperature, the slide has been immersed in an appropriate vessel containing distilled water at room temperature, for approx. half a minute.

**.** The sample may now be subjected to the endogenous peroxidase inhibition procedure, according to the methods commonly in use (immersion in a 3% solution of H₂O₂ for 5 minutes) and subsequent immunohistochemical staining with CD3 monoclonal antibody (manufacturer: LabVision, USA) using the streptavidin-biotin peroxidase staining method (Manufacturer: LabVision). Immunostaining protocol: 1) CD3 monoclonal antibody, use a sufficient number of drops to cover the section. Incubate for 1 hour at room temperature. 2) Wash the slide carefully with PBS buffer pH 7.4. 3) Biotinylated secondary antibody, entirely cover the section and incubate for 10 minutes at room temperature. 4) wash the slide carefully with PBS buffer pH 7.4, repeating the operation three times. 5) Streptavidin-peroxidase complex, entirely cover the section and incubate for 10 minutes at room temperature. 6) Wash the slide carefully with PBS buffer pH 7.4, repeating the operation three times. 7) Chromogen/substrate: Diaminobenzidine solution. Entirely cover the section with the chromogen solution. Incubate for 2-5 minutes at room temperature. 8) Once the developed signal is detected, stop the reaction by washing the slide with tap water. 9) Counterstaining: Mayer's hemallume. Incubate for 5 minutes at room temperature and subsequently differentiate in tap water for 5 minutes. 9) dehydrate in 95% ethanol for 1 minute (twice) and subsequently in absolute ethanol for 1 minute (twice). 10) Cleared with Xylene for 5 minutes and mounted using xilene based means of mounting (Eukitt). 11) Observe using a microscope. 12) Results. Areas of positive reaction: brown - red. Nuclei: dark blue.

### EXAMPLE 3

### De-paraffinisation and unmasking of a tonsil section histological sample on a slide - TEC buffer (Tris-EDTA-sodium citrate)

To a litre of a 0.01 M TEC buffer solution pH 8 has been added Sorbitan (20) OE monostearate in an amount of 5% weight/volume. Into a processing beaker, equipped with means of stirring, are poured 500 ml of TEC buffer sodium citrate-Tris-EDTA at pH 8.0. Afterwards, 50 g of polysorbate 60 (Fluka - Sigma Aldrich), 10 ml of dibutylglycol (Fluka - Sigma Aldrich), 0.3 ml of Citrex (Citrex Inc. Florida) are added with stirring. The remaining buffer is used for washing the receptacles used for measuring out the individual components, pouring all of it into the processing beaker. At this point, it is stirred for 5 minutes at room temperature.

. Afterwards, 250 ml of the solution, thus prepared, have been poured into a histology tray with a working capacity of 250 ml. Such tray is placed into a thermostatically controlled bath, of the type described with reference to example 1 and adjusted to a temperature of approx. 95°C. At this point, the slide to be deparaffinised and unmasked has been immersed into said solution and left for 45 minutes. At the end of this period of time, the slide, after cooling for about 20 minutes obtained by leaving the solution at room temperature, has been immersed in an appropriate vessel containing distilled water at room temperature, for approx. half a minute.

**.** The sample may now be subjected to the endogenous peroxidase inhibition procedure, according to the methods commonly in use (immersion in a 3% solution of H₂O₂ for 5 minutes) and subsequent immunohistochemical staining with CD4 monoclonal antibody clone 1F6 (manufacturer: LabVision, USA) using the streptavidin-biotin peroxidase staining method. Immunostaining protocol: 1) CD3 monoclonal antibody, use a sufficient number of drops to cover the section. Incubate for 1 hour at room temperature. 2) Wash the slide carefully with PBS buffer pH 7.4. 3) Biotinylated secondary antibody, entirely cover the section and incubate for 10 minutes at room temperature. 4) wash the slide carefully with PBS buffer pH 7.4, repeating the operation three times. 5) Streptavidin-peroxidase complex, entirely cover the section and incubate for 10 minutes at room temperature. 6) Wash the slide carefully with PBS buffer pH 7.4, repeating the operation three times. 7) Chromogen/substrate: Diaminobenzidine solution. Entirely cover the section with the chromogen solution. Incubate for 2-5 minutes at room temperature. 8) Once the developed signal is detected, stop the reaction by washing the slide with tap water. 9) Counterstaining: Mayer's hemallume. Incubate for 5 minutes at room temperature and subsequently differentiate in tap water for 5 minutes. 9) dehydrate in 95% ethanol for 1 minute (twice) and subsequently in absolute ethanol for 1 minute (twice). 10) Cleared with Xylene for 5 minutes and mounted using xilene based means of mounting (Eukitt). 11) Observe using a microscope. 12) Results: positively stained areas: brown - red. Nuclei: dark blue.

### EXAMPLE 4

### De-paraffinisation and unmasking of a histological sample: tonsil section on a microscope slide - Citrate buffer/Sodium azide

1 litre of a 0.01 M citrate buffer solution, pH 6.0 has been prepared, to which in the region of 5% weight/volume Sorbitan (20) OE monostearate and 0.09% sodium azide, by weight over the total volume of the solution, have been added. Into a processing beaker, equipped with means of stirring, are poured 500 ml of 0.01 M citrate buffer pH 6.0. Afterwards, 50 g of polysorbate 60 (Fluka), 10 ml of dibutylglycol (ACEF), 0.3 ml of Citrex (Citrex Inc.) and 0.9 g of sodium azide (SIGMA - ALDRICH) are added with stirring. The remaining buffer is used for washing the receptacles used for measuring out the individual components, pouring all of it into the processing beaker. At this point, it is stirred for 5 minutes at room temperature.

**.** Afterwards, 250 ml of the solution, thus prepared, have been poured into a histology tray with a working capacity of 250 ml. Such tray is placed into a thermostatically controlled bath, of the type described in example 1 and adjusted to a temperature of approx. 95°C. At this point, the slide to be de-paraffinised and unmasked has been immersed into said solution and left for 45 minutes. At the end of this period of time, the slide has been immersed, after cooling for about 20 minutes obtained by leaving the solution at room temperature, in an appropriate vessel containing distilled water at room temperature, for approx. half a minute. [0069]. The sample may now be subjected (without passing in hydrogen peroxide in order to inhibit peroxidases) to immunohistochemical staining with CD4 monoclonal antibody clone 1F6 (manufacturer: LabVision, USA) using the streptavidin-biotin peroxidase staining method. Immunostaining protocol: 1) CD3 monoclonal antibody, use a sufficient number of drops to cover the section. Incubate for 1 hour at room temperature. 2) Wash the slide carefully with PBS buffer pH 7.4. 3) Biotinylated secondary antibody, entirely cover the section and incubate for 10 minutes at room temperature 4) wash the slide carefully with PBS buffer pH 7.4, repeating the operation three times. 5) Streptavidin-peroxidase complex, entirely cover the section and incubate for 10 minutes at room temperature. 6) Wash the slide carefully with PBS buffer pH 7.4, repeating the operation three times. 7) Substrate/chromogen: Diaminobenzidine solution. Entirely cover the section with the chromogen solution. Incubate for 2-5 minutes at room temperature. 8) Once the developed signal is detected, stop the reaction by washing the slide with tap water. 9) Counterstaining: Mayer's hemallume. Incubate for 5 minutes at room temperature and subsequently differentiate in tap water for 5 minutes. 9) dehydrate in 95% ethanol for 1 minute (twice) and subsequently in absolute ethanol for 1 minute (twice). 10) Cleared with Xylene for 5 minutes and mounted using xylene based means of mounting (Eukitt). 11) Observe using a microscope. 12) Results. Areas of positive reaction: Brown - red. Nuclei: dark blue.

## Claims

1. A method of preparation of a histological sample included in paraffin for its diagnostic staining comprising the following stages:
- heating said sample so as to substantially obtain the complete melting of said paraffin;
- washing said sample in such a manner as to remove the molten paraffin with a surfactant solution comprising at least one surfactant capable of sequestering said paraffin.

2. The method according to claim 1, wherein said surfactants capable of sequestering paraffin are selected from ionic and non-ionic surfactants.

3. The method according to claim 2, wherein said non-ionic surfactants are selected from the group constisting of sorbitan polyethoxylate derivatives, sorbitan derivatives and polyethylenic glycol derivatives.

4. The method according to claims 2 or 3, wherein said non-ionic surfactants comprise compounds esterified with fatty acids having linear saturated and unsaturated hydrocarbon chains containing C₈-C₂₀ carbon atoms.

5. The method according to claim 4, wherein said hydrocarbon chains are C₁₂, C₁₄, C₁₆ or C₁₈.

6. The method according to any of the claims 3 to 5, wherein the sorbitan polyethoxylates are selected from amongst the polysorbates, preferably polysorbate 20, polysorbate 60 and polysorbate 80.

7. The method according to any of the claims 3 to 5, wherein the polyethylenic glycols are selected from POE 40 monostearate stearate and POE 50 monostearate.

8. The method according to any of the claims 1 to 6, wherein the sorbitan ester is esterified with stearic acid.

9. The method according to any of the claims 3 to 5, wherein the sorbitan derivatives are selected from amongst sorbitan monolaurate, sorbitan palmitate, sorbitan stearate and sorbitan oleate.

10. The method according to any of the claims 2 to 9, wherein said non-ionic surfactants are selected in such a manner as to have a hydrophilic/lipophilic balance (HLB) comprised of between 13 and 20.

11. The method according to any of the claims 1 to 10, wherein said surfactants are present in concentrations which vary from 3 to 10% with respect to the volume of the wash solution.

12. The method according to any of the claims 1 to 11, wherein the heating stage and the washing stage are carried out simultaneously.

13. The method according to any of the claims 1 to 12, wherein the heating stage is carried out at a temperature comprised of between 60°C and 65°C for a period of time comprised of between 3 minutes and 60 minutes.

14. The method according to any of the claims 1 to 13, wherein said surfactant solution comprises a preservative.

15. The method according to claim 14, wherein the preservative is selected from the group constisting of hydrosoluble preservatives, and is added to said solution in quantities which vary from 0.01% to 0.03% with respect to the volume of the wash solution.

16. The method according to any of the claims 1 to 15, wherein said surfactant solution comprises sodium azide as a preserving agent and peroxidase inhibitory agent in quantities which vary from 0.09% to 7%, preferably from 0.09% to 0.2% with respect to the volume of the wash solution.

17. The method according to any of the claims 1 to 16, wherein said washing stage is performed with stirring.

18. The method according to any of the claims 1 to 17, wherein said washing solution additionally comprises a co-emulsifier selected from the group constisting of glycol and polyglycol ethers and is present in quantities which vary from 1% to 2% with respect to the volume of the washing solution.

19. The method according to claim 18, wherein said co-emulsifier is dibutylglycol.

20. The method according to any of the claims 1 to 19, additionally comprising an unmasking stage of the antigenic sites.

21. The method according to claim 20, wherein said unmasking stage is performed simultaneously with the washing stage of the molten paraffin from the sample.

22. The method according to claims 20 or 21, wherein said unmasking stage is carried out through the washing of said sample with a solution comprising a buffer as a solvent, at a temperature comprised of between 90°C and 100°C and for a period of time comprised of between 20 minutes and 50 minutes.

23. A preparation kit for the diagnostic staining of histological samples included in paraffin, comprising a surfactant solution capable of sequestering the paraffin.

24. The kit according to claim 23, wherein said surfactant solution is a solution comprising at least one surfactant selected from amongst the compounds reported in any of the claims 2 to 10.

25. The kit according to claims 23 or 24, wherein said non-ionic surfactant solution additionally comprises a preservative.

26. The kit according to claim 25, wherein said preservative is selected from those reported in claims 15 or 16.

27. The kit according to any of the claims 23 to 26, additionally comprising a treatment solution adapted to unmasking the antigenic sites of said histological sample.

28. The kit according to claim 27, wherein said unmasking solution comprises a buffer as solvent.

29. The kit according to any of the claims 23 to 28, wherein said surfactant solution and said unmasking solution are included within a single container.

30. The kit according to any of the claims 23 to 29, wherein said surfactant solution additionally comprises a buffer as solvent.

31. The kit according to any of the claims 23 to 30, additionally comprising a histological stain.

32. The kit according to any of the claims 23 to 31, additionally comprising at least one histology slide.

33. The kit according to claim 32, additionally comprising at least one coverslip.

34. The kit according to any of the claims 23 to 33, additionally comprising a substance for making said histological sample adhere to said histology slide.

35. The kit according to claim 33, additionally comprising a glue adapted to fixing said coverslip to said histology slide.
